# EUROPÄISCHE PATENTANMELDUNG

(11) **EP 4 008 705 A1**
(43) Veröffentlichungstag der Anmeldung: **08.06.2022**
(21) Anmeldenummer: 20211985.5
(22) Anmeldetag: 04.12.2020
(51) Int. Cl.: C05D 1/02, C05D 1/04, C05B 7/00, C05D 9/02, C05G 5/12

(54) **VERFAHREN ZUR HERSTELLUNG VON KALIUM, MAGNESIUM UND SULFAT ENTHALTENDEN GRANULATEN**

(71) Anmelder: K+S Aktiengesellschaft, 34131 Kassel (DE)
(72) Erfinder: KOPF, Sebastian, 36433 Bad Salzungen (DE); THENERT, Stefan, 36266 Heringen (DE); TROMBACH, Dieter, 36284 Hohenroda (DE)
(74) Vertreter: Reitstötter Kinzebach

(57) **Zusammenfassung**

Die vorliegende Erfindung betrifft ein Verfahren zur Herstellung von Kalium, Magnesium und Sulfat enthaltenden Granulaten, umfassend die Granulierung einer Salzmischung aus Polyhalit und Kaliumchlorid und weiteren Bestandteilen. Die Erfindung betrifft auch die nach dem Verfahren erhältlichen Kaliumchlorid-Granulate und deren Verwendung als Düngemittel oder zur Herstellung von Düngemittelzusammensetzungen. Das Verfahren umfasst die Granulierung einer Salzmischung enthaltend
a) 80 bis 99,9 Gew.-% eines Gemischs aus feinteiligem Polyhalit mit feinteiligem Kaliumchlorid, wobei das Massenverhältnis von feinteiligem Polyhalit zu feinteiligem Kaliumchlorid im Bereich von 1 : 3 bis 3 : 1, speziell im Bereich von 1 : 2 bis 1,5 : 1 liegt,
b) 0,05 bis 1,5 Gew.-%, insbesondere 0,1 bis 1,2 Gew.-%, speziell 0,15 bis 1,1 Gew.-%, Natriumcarbonat, im Folgenden Verbindung A,
c) gegebenenfalls 0,05 bis 1,2 Gew.-%, insbesondere 0,2 bis 0,7 Gew.-%, speziell 0,25 bis 0,5 Gew.-%, wenigstens einer Verbindung B aus der Gruppe der Alkalimetallorthophosphate, Alkalimetallmetaphosphate, Alkalimetallpolyphosphate, Dialkalimetallhydrogenphosphate, Alkalimetalldihydrogenphosphate, Alkalimetallorthosilikate und der Alkalimetallmetasilikate und deren Gemischen,
wobei die Angaben in Gew.-% sich auf das Gesamtgewicht der von ungebundenem Wasser verschiedenen Bestandteile der Salzmischung beziehen und im Falle der Verbindung A als Na₂CO₃ gerechnet ist.

## Beschreibung

Die vorliegende Erfindung betrifft ein Verfahren zur Herstellung von Kalium, Magnesium und Sulfat enthaltenden Granulaten, umfassend die Granulierung einer Salzmischung aus Polyhalit und Kaliumchlorid und weiteren Bestandteilen. Die Erfindung betrifft auch die nach dem Verfahren erhältlichen Kaliumchlorid-Granulate und deren Verwendung als Düngemittel oder zur Herstellung von Düngemittelzusammensetzungen.

Kalium, Magnesium und Schwefel sind wichtige Pflanzennährstoffe und daher häufige Bestandteil landwirtschaftlicher Düngemittel. In diesen sind sie in der Regel in Form von Salzen enthalten. Schwefel wird typischerweise in Form von Sulfaten eingesetzt, kann aber auch als elementarer Schwefel in Düngemittel enthalten sein. Typische Düngemittelsalze sind Kaliumsulfat, Magnesiumsulfat, Kaliumchlorid, Natriumsulfat sowie Mischsalze, z. B. Langbeinit (K₂Mg₂[SO₄]₃).

Die vorgenannten Salze werden häufig in Form von Granulaten vermarktet, da diese vorteilhaften Handhabungseigenschaften aufweisen. So neigen Granulate im Vergleich zu feinteiligem kristallinen Salzen in sehr viel geringerem Maße zur Staubbildung, sind lagerstabiler, neigen weniger zum Verbacken und lassen sich bei Anwendung als Düngemittel leichter und gleichmäßiger durch Streuen ausbringen. Die Qualität der Granulate und damit der am Markt erzielbare Preis hängen sowohl von der Reinheit wie auch von der Granulat-Qualität ab.

Eines der üblichen Granulierverfahren für die Herstellung von Salz-Granulaten ist die Pressagglomeration. Bei der Pressagglomeration wird das feinteilige Ausgangsmaterial gegebenenfalls in Gegenwart geringer Mengen an Wasser durch Anwendung von Druck verdichtet, so dass teilweise sehr hohe Kräfte auf die Primärpartikel wirken. Hierdurch kommt es zu Verformungen der Primärpartikel im Kontaktbereich, beispielsweise durch plastische Verformung, welche die Haftung der Primärpartikel untereinander beträchtlich verstärken. In Folge von Reibungswärme können auch örtlich Sintervorgänge auftreten, sodass sich Festkörperbrücken zwischen den Primärpartikeln bilden.

Der eigentlichen Agglomeration schließt sich, gegebenenfalls nach Trocknung des feuchten Granulates, eine Klassierung des primär erhaltenen Granulates an, bei dem das Primärgranulat in Fraktionen der gewünschten Partikelgröße aufgetrennt wird.

Polyhalit ist ein Mineral aus der Klasse der Sulfate und weist folgende chemische Zusammensetzung auf: K₂Ca₂Mg[SO₄]₄·2H₂O. Polyhalit kristallisiert triklin in der Raumgruppe *P*1 (Raumgruppen-Nr. 2) mit den Gitterparametern *a* = 11.689 Å; *b* = 16.332 Å; *c* = 7,598 Å; α = 91.65°; β = 90,0° und γ = 91,9° sowie vier Formeleinheiten pro Elementarzelle (Handbook of Mineralogy Vol. V - Polyhalite, 2003, The Mineralogical Society of America). Größere Vorkommen an Polyhalit findet man in Europa unter anderem in Österreich, Deutschland und Großbritannien sowie außerhalb Europas in den USA, China, Indien, Ukraine, Türkei und Iran.

Aufgrund der Kombination der Pflanzennährstoffe Kalium, Magnesium und Schwefel in Form des Sulfats ist Polyhalit prinzipiell als Mineraldünger geeignet. Als Düngemittel wird Polyhalit vornehmlich in Form von Produkten mit Korngrößen im Bereich von 2 bis 5 mm angeboten, beispielsweise als Rollagglomerate oder als ein durch mechanisches Zerkleinern von bergmännisch abgebautem Polyhalit hergestelltes Produkt. Beim Zerkleinern des bergmännisch abgebauten Polyhalits fallen größere Mengen an feinteiligem Polyhalit an, welches als Düngemittel weniger geeignet ist, da es nicht zuletzt aufgrund der geringen Korngröße schwierig zu handhaben ist.

Es besteht daher grundsätzlich ein Bedarf an einem Verfahren, das die Weiterverarbeitung größerer Mengen feinteiligen Polyhalits zu Düngemittelgranulaten erlaubt. Leider ist die Duktilität des Polyhalit gering, so dass eine Pressgranulierung bzw. Pressagglomeration des feinteiligen Polyhalits nicht zu mechanisch stabilen Granulaten führt.

WO 2018/229757 und WO 2020/105057 beschreiben ein Verfahren zur Pressgranulierung von Polyhalit mit Kaliumsalzen wie Kaliumchlorid. Die Pressgranulierung kann in Gegenwart üblicher Bindemittel wie Stärke, Melasse, Cellulose, Saccharose, Ligninsulfonat, Bentonit, Natriumsilikat, Alginit, Calciumhydroxid, Zemente wie Portlandzement und Flugasche, Tonmineralien, Magnesiumoxid, Calciumoxid, Mineralsäuren, Bitumen, Öle und Wachse erfolgen.

WO 2019/016804 beschreibt ein Granulat aus Polyhalit, einem Kaliumsalz und 1 bis 5 Gew.-% Bindemittel. Die Herstellung erfolgt vorzugsweise durch eine Rollagglomeration. Als Bindemittel werden insbesondere Stärke und silikatische Bindemittel wie Flugasche eingesetzt.

DE 102017010084 beschreibt ein Verfahren zur Herstellung polyhalithaltiger Düngemittelgranulate durch Pressagglomeration einer Salzmischung aus feinteiligem Polyhalit mit feinteiligem Kaliumchlorid in einem Massenverhältnis von 1 : 5 bis 4 : 1.

Die aus dem Stand der Technik bekannten polyhalithaltigen Kaliumchlorid-Granulate weisen jedoch keine zufriedenstellenden mechanische Eigenschaften auf, wenn sie über einen längeren Zeitraum einer Atmosphäre mit erhöhter Luftfeuchtigkeit oder direkter Einwirkung von Feuchtigkeit ausgesetzt sind. Die bekannten polyhalithaltigen Kaliumchlorid-Granulate weisen nach Lagerung bei erhöhter Luftfeuchtigkeit oder nach Bewetterung insbesondere eine unzureichende Bruch- bzw. Berstfestigkeit und einen nicht zufriedenstellenden Abrieb aus.

Der vorliegenden Erfindung liegt somit die Aufgabe zugrunde, Granulate auf Basis von Polyhalit und Kaliumchlorid, im Folgenden auch als polyhalithaltigen Kaliumchlorid-Granulate bezeichnet, bereitzustellen, die auch nach Einwirkung von Feuchtigkeit gute mechanische Eigenschaften aufweisen. Die polyhalithaltigen Kaliumchlorid-Granulate sollten insbesondere auch nach längerer Einwirkung von hoher Luftfeuchtigkeit, zum Beispiel einer Luftfeuchtigkeit bei 72 % RH (relative Luftfeuchte) oder nach anderer Feuchtigkeitseinwirkung, z. B. in Folge von Bewetterung, zufriedenstellende bzw. gute mechanische Eigenschaften ausweisen, d.h. die Bruch- bzw. Berstfestigkeiten sollten auch bei hoher Luftfeuchtigkeit hoch und der Abrieb bei mechanischer Belastung gering sein.

Es wurde überraschenderweise gefunden, dass diese und weitere Aufgaben gelöst werden, in dem man dem zur Herstellung der Granulate eingesetzten Salzgemisch aus Polyhalit und Kaliumchlorid Natriumcarbonat und/oder eines seiner Hydrate, oder eine Kombination von wenigstens einer Verbindung B aus der Gruppe der Alkalimetallphosphate, (Erd)alkalimetallborate und Alkalimetallsilikate mit wenigstens eine Verbindung A, ausgewählt aus der Gruppe Natriumcarbonat und/oder eines seiner Hydrate, zusetzt. Durch die Verbindung A, insbesondere jedoch durch eine Kombination der Verbindung A mit wenigstens einer Verbindung B bleiben die guten mechanischen Eigenschaften von polyhalithaltigen Kaliumchlorid-Granulaten auch nach längerer Lagerung bei höherer Luftfeuchtigkeit von beispielsweise 72 % RH oder anderen Einwirkungen von Feuchtigkeit erhalten. Gleichzeitig wird die Feuchteaufnahme der polyhalithaltigen Kaliumchlorid-Granulate verringert. Überraschenderweise werden diese Vorteile bereits durch geringe Mengen der Verbindung A und insbesondere der erfindungsgemäßen Kombination aus Verbindungen A + B erreicht, was wirtschaftlich von Vorteil ist, zumal die vergleichsweise teuren Alkalimetallphosphat-, (Erd)alkalimetallborat- oder Alkalimetallsilikat-Additive durch preiswertere Alkalimetallcarbonat teilweise oder vollständig ersetzt werden können.

Dementsprechend betrifft die vorliegende Erfindung ein Verfahren zur Herstellung von Kalium, Magnesium und Sulfat enthaltenden Granulaten, umfassend die Granulierung einer Salzmischung enthaltend
a) 80 bis 99,9 Gew.-% eines Gemischs aus feinteiligem Polyhalit mit feinteiligem Kaliumchlorid, wobei das Massenverhältnis von feinteiligem Polyhalit zu feinteiligem Kaliumchlorid im Bereich von 1 : 3 bis 3 : 1, speziell im Bereich von 1 : 2 bis 1,5 : 1 liegt,
b) 0,05 bis 1,5 Gew.-%, insbesondere 0,1 bis 1,2 Gew.-%, speziell 0,15 bis 1,1 Gew.-%, Natriumcarbonat, im Folgenden Verbindung A,
c) gegebenenfalls 0,05 bis 1,2 Gew.-%, insbesondere 0,2 bis 0,7 Gew.-%, speziell 0,25 bis 0,5 Gew.-%, wenigstens einer Verbindung B aus der Gruppe der Alkalimetallorthophosphate, Alkalimetallmetaphosphate, Alkalimetallpolyphosphate, Dialkalimetallhydrogenphosphate, Alkalimetalldihydrogenphosphate, Alkalimetallorthosilikate und der Alkalimetallmetasilikate und deren Gemischen,
wobei die Angaben in Gew.-% sich auf das Gesamtgewicht der von ungebundenem Wasser verschiedenen Bestandteile der Salzmischung beziehen und im Falle der Verbindung A als Na₂CO₃ gerechnet ist.

Bevorzugte Ausgestaltungen des erfindungsgemäßen Verfahrens sind in den Unteransprüchen und im Folgenden beschrieben.

Die nach dem erfindungsgemäßen Verfahren erhältlichen Granulate zeichnen sich durch eine höhere mechanische Festigkeit, insbesondere durch eine höhere Bruch- bzw. Berstfestigkeit aus. Zudem zeichnen sich die Granulate durch einen geringen Abrieb aus. Die vorteilhaften mechanischen Eigenschaften kommen insbesondere dann zum Tragen, wenn das erfindungsgemäß hergestellte Granulat Feuchtigkeit in Folge einer Bewetterung, z. B. einer Atmosphäre mit erhöhter Luftfeuchtigkeit, insbesondere einer Luftfeuchtigkeit bei 72 % RH, ausgesetzt ist.

Dementsprechend betrifft die vorliegende Erfindung auch die nach dem erfindungsgemäßen Verfahren erhältlichen Kalium, Magnesium und Sulfat enthaltenden Granulate.

Die Erfindung betrifft auch die Verwendung eines Kalium, Magnesium und Sulfat enthaltenden Granulats als Düngemittel oder zur Herstellung von Düngemittelzusammensetzungen.

Unter dem Begriff "feinteililg" in Bezug auf Polyhalit und Kaliumchlorid versteht man ein für die Herstellung von Granulaten übliches Kornband, bei dem typischerweise wenigstens 80 Gew.-%, insbesondere wenigstens 90 Gew.-% der Salzpartikel eine Korngröße von maximal 2 mm, insbesondere maximal 1,5 mm und speziell maximal 1,2 mm aufweisen und vorzugsweise wenigstens 80 Gew.-% der Salzpartikel in der Salzmischung Teilchengrößen im Bereich von 0,01 bis 2 mm, insbesondere im Bereich von 0,1 bis 1,5 mm, und speziell im Bereich von 0,2 bis 1,2 mm, bestimmt mittels Siebanalyse nach DIN 66165:2016-08, aufweisen.

Unter dem Begriff "ungebundenes Wasser" versteht man das in der Salzmischung bzw. dem Granulat enthaltene Wasser, das nicht in Form von Kristallwasser vorliegt, ergo das nicht als Kristallwasser gebundene Wasser. Mit anderen Worten versteht man unter dem Ausdruck "Gesamtgewicht der von ungebundenem Wasser verschiedenen Bestandteile" das Gesamtgewicht aller Bestandteile einer Zusammensetzung, z. B. des Granulats oder der Salzmischung, einschließlich des darin enthaltenen Kristallwassers. Das in einer Zusammensetzung enthaltene ungebundene Wasser kann in an sich bekannter Weise durch Bestimmung des Trockenverlusts bestimmt werden.

Unter dem Begriff "(Erd)alkaliborat" versteht man die Alkalimetallsalze, Erdalkalimetallsalze und gemischte Alkalimetall-Erdalkalimetallsalze der Borsäure.

Bei den hier und im Folgenden angegebenen Korngrößen handelt es sich in der Regel um diejenigen Werte, wie sie mittels Siebanalyse nach DIN 66165:2016-08 bestimmt werden. Die Ermittlung der Massenanteile der jeweiligen Korngrößen bzw. Korngrößenbereiche erfolgt nach Maßgabe der DIN 66165:2016-08 durch Fraktionierung des dispersen Guts unter Verwendung von mehreren Sieben mittels maschineller Siebung in vorkalibrierten Systemen. Sofern nichts anderes angegeben ist, sind Prozentangaben im Zusammenhang mit Teilchen- bzw. Korngrößen als Angaben in Gew.-% zu verstehen. In diesem Zusammenhang bezeichnet der d₉₀-Wert diejenige Korngröße, die von 90 Gew.-% der Salzkörner unterschritten wird. Der d₁₀-Wert bezeichnet diejenige Korngröße, die von 10 Gew.-% der Salzkörner unterschritten wird. Der d₅₀-Wert bezeichnet die gewichtsmittlere Korngröße. Die Korngrößenverteilung kann auch durch Laserlichtstreuung (Laserlichtbeugung), beispielsweise nach der in ISO 13320:2009 angegebenen Methode, bestimmt werden, insbesondere im Falle sehr kleiner Partikel mit Partikelgrößen < 200 µm.

Natriumcarbonat (Verbindung A) und die genannten Phosphate/Silikate/Borate (Verbindung B) werden im Folgenden auch als Additive bezeichnet.

Unter Polyhalit versteht man ein Mineral, das einen Gehalt an kristallinem K₂Ca₂Mg[SO₄]₄·2H₂O von in der Regel wenigstens 90 Gew.-%, insbesondere wenigstens 95 Gew.-% aufweist. Bei dem im erfindungsgemäßen Verfahren eingesetzten Polyhalit handelt es sich um nichtkalziniertes Polyhalit. In der Regel handelt es sich um ein Polyhalit in der auf dem Markt üblichen Qualität. Vorzugsweise ist das Polyhalit ein beim Zerkleinern eines bergmännisch abgebauten Polyhalits anfallender feinteiliger Polyhalit und/oder Polyhalit-Staub. Bei dem Polyhalit kann es sich aber auch um Rückgut aus einer Herstellung eines polyhalithaltigen Granulats handeln.

Neben dem kristallinem K₂Ca₂Mg[SO₄]₄·2H₂O kann das Polyhalit auch in untergeordnetem Maße andere Alkali- und Erdalkalimetallsalze, insbesondere in Form der Chloride und Sulfate, enthalten. Typischerweise wird ein im erfindungsgemäßen Verfahren eingesetztes Polyhalit etwa folgende Zusammensetzung aufweisen:
Kalium: 11,0 bis 13,0 Gew.-%
Magnesium: 3,4 bis 4,3 Gew.-%
Calcium: 11,0 bis 13,5 Gew.-%
Sulfat: 55,0 bis 64,0 Gew.-%

Außerdem enthält das Polyhalit Kristallwasser, typischerweise in Mengen von 5,0 bis 7,0 Gew.-%. Der Kristallwassergehalt kann über den Glühverlust bei 550 °C bestimmt werden. Die Restfeuchte des Polyhalits, bedingt durch anhaftende Feuchtigkeit wird in der Regel 0,5 Gew.-%, bezogen auf das Polyhalit, nicht überschreiten und liegt typischerweise im Bereich von 0,1 bis 0,4 Gew.-%. Der Trocknungsverlust wird typischerweise in Anlehnung an DIN EN 12880:2000 bestimmt, indem man eine Probe des Polyhalits bei Temperaturen im Bereich von 105 ± 5 °C bei Umgebungsdruck bis zur Gewichtskonstanz trocknet.

Der Natriumgehalt des im erfindungsgemäßen Verfahren eingesetzten Polyhalits liegt in der Regel unterhalb 2 Gew.-% und der Chloridgehalt liegt typischerweise unterhalb 5 Gew.-%.

Das feinteilige Polyhalit weist ein für die Herstellung von Granulaten übliches Kornband auf. Die mittlere Korngröße (Gewichtsmittel, d₅₀-Wert) des Polyhalits liegt typischerweise im Bereich von 50 µm bis 1500 µm, insbesondere im Bereich von 100 µm bis 1200 µm. Der d₉₀-Wert des im erfindungsgemäßen Verfahren eingesetzten Polyhalits liegt in der Regel bei maximal 2 mm, insbesondere maximal 1,5 mm und speziell maximal 1,2 mm.

Bei dem feinteiligen Kaliumchlorid handelt es sich grundsätzlich um ein festes Kaliumchlorid, das ein für die Herstellung von Kaliumchlorid-Granulaten übliches Kornband aufweist. Die mittlere Korngröße (Gewichtsmittel) des Kaliumchlorids liegt typischerweise im Bereich von 20 µm bis 1000 µm, insbesondere im Bereich von 50 µm bis 800 µm. Der d₉₀-Wert des im erfindungsgemäßen Verfahren eingesetzten Kaliumchlorids liegt in der Regel bei maximal 2 mm, insbesondere maximal 1,5 mm und speziell maximal 1,2 mm.

Das erfindungsgemäße Verfahren ist in der Regel für beliebige Kaliumchlorid-Qualitäten geeignet. Typischerweise wird ein Kaliumchlorid mit Kaliumgehalten von wenigstens 50 Gew.-%, gerechnet als K₂O, entsprechend einem Gehalt von Kaliumchlorid von wenigstens 80 Gew.-%, eingesetzt. Insbesondere weist ein solches Kaliumchlorid einen Gehalt an KCl von wenigstens 85 Gew.- %, z. B. im Bereich von 85 bis 99,9 Gew.-%, insbesondere wenigstens 90 Gew.-%, z. B. im Bereich von 90 bis 99,9 Gew.-%, jeweils bezogen auf die von Wasser verschiedenen Bestandteile des Kaliumchlorids, auf. Neben KCl kann das Kaliumchlorid auch andere, von Kaliumchlorid und Wasser verschiedene Bestandteile enthalten. Bei diesen Bestandteilen handelt es sich insbesondere um Natriumchlorid, Bromide des Natriums oder des Kaliums oder Erdalkalimetallhalogenide wie Magnesiumchlorid und Calciumchlorid und deren Oxide. Die Gesamtmenge derartiger Bestandteile wird insbesondere 15 Gew.-% und speziell 10 Gew.-% nicht überschreiten und liegt typischerweise im Bereich von 0,1 bis 15 Gew.-% und speziell im Bereich von 0,1 bis 10 Gew.-%.

Die Herstellung der polyhalithaltiger Düngemittelgranulate, umfasst erfindungsgemäß die Granulierung einer Salzmischung aus Polyhalit, Kaliumchlorid, Natriumcarbonat und wenigstens eine Verbindung B. Die im erfindungsgemäßen Verfahren eingesetzte Salzmischung kann auch untergeordnete Mengen weiterer Salze sowie Wasser, das nicht als Kristallwasser gebunden ist, enthalten. In der Regel machen K₂Ca₂Mg[SO₄]₄·2H₂O und KCl wenigstens 80 Gew.-%, insbesondere wenigstens 85 Gew.-% und speziell wenigstens 90 Gew.-% der Gesamtmasse der in der zur Granulierung eingesetzten Salzmischung enthaltenen festen Bestandteile aus, d. h. der Bestandteile, die von etwaigen, nicht als Kristallwasser gebundenen Wasser verschieden sind. Dementsprechend wird der Anteil an Salzen, die von K₂Ca₂Mg[SO₄]₄·2H₂O und KCl verschieden ist, in der Regel 20 Gew.-%, insbesondere 15 Gew.-% und speziell 10 Gew.-%, bezogen auf die Gesamtmasse der festen Bestandteile der Salzmischung, nicht überschreiten.

Erfindungsgemäß liegt der Massenanteil des Gemischs aus Polyhalit mit Kaliumchlorid im Bereich von 80 bis 99,9 Gew, vorzugsweise im Bereich von 85 Gew.-% bis 99,7 Gew.-%, und speziell im Bereich von 90 bis 99,6 Gew.-%, bezogen auf das Gesamtgewicht der von ungebundenem Wasser verschiedenen Bestandteile Salzmischung. Hierbei liegt das Massenverhältnis von feinteiligem Polyhalit zu feinteiligem Kaliumchlorid in der zur Pressagglomeration eingesetzten Salzmischung insbesondere im Bereich von 1 : 2 bis 1,5 : 1.

Die Salzmischung kann neben Polyhalit mit Kaliumchlorid sowie den Additiven A und gegebenenfalls B weitere Salze enthalten. Hierzu zählen neben etwaigen Verunreinigungen, die in dem eingesetzten Polyhalit und Kaliumchlorid enthalten sind, sulfatische Natrium- und Kaliumsalze und Magnesiumsalze wie Kaliumsulfat, Natriumsulfat, Magnesiumsulfate wie Kieserit und Langbeinit, MgO, MgCO₃, und Calciumsulfat, einschließlich seiner Hydrate, sowie salzartige Mikronährstoffe, wie sie häufig in Düngemitteln eingesetzt werden. Die Gesamtmenge der weiteren Salze wird 20 Gew.-%, insbesondere 15 Gew.-% und speziell 10 Gew.-%, bezogen auf das Gesamtgewicht der von ungebundenem Wasser verschiedenen Bestandteile der Salzmischung, nicht überschreiten.

Zu den salzartigen Mikronährstoffen zählen salzartige Borverbindungen sowie Salze und Komplexverbindungen der Elemente Mangan, Zink, Kupfer, Eisen und Molybdän. Mangan, Kupfer und Zink werden dabei vorzugsweise in Form ihrer Sulfate eingesetzt. Kupfer und Eisen werden vorzugsweise auch in Form von Chelaten, z. B. mit EDTA, eingesetzt. Bor wird vorzugsweise als Calcium-Natrium-Borat, z. B. in Form von Ulexit, Natriumborat, Kaliumborat oder Borsäure eingesetzt. Molybdän wird vorzugsweise als Natrium- oder Ammoniummolybdat oder als Mischung davon eingesetzt. Typischerweise wird der Anteil an von Bor verschiedenen Mikronährstoffen, gerechnet in ihrer elementaren Form, 1 Gew.-%, bezogen auf die Gesamtmasse der von ungebundenem Wasser verschiedenen Salzmischung, nicht überschreiten. Der Gehalt an Bor, gerechnet als B₂O₃ wird in der Regel 3 Gew.-% nicht überschreiten und liegt typischerweise, sofern enthalten, im Bereich von 0,01 bis 3 Gew.-%, insbesondere 0,01 bis 2 Gew.-%, bezogen auf die Gesamtmasse der von ungebundenem Wasser verschiedenen Bestandteile der erfindungsgemäß eingesetzten Salzmischung.

Weiterhin können die zur Granulierung eingesetzten Salzmischungen auch organische Bindemittel enthalten, beispielsweise Tylose, Melasse, Gelatine, Stärke, Ligninsulfonate oder Salze von Polycarbonsäuren wie Natriumcitrat oder Kaliumcitrat oder Fettsäuresalze wie Calciumstearat. Der Anteil der organischen Bindemittel wird typischerweise 2 Gew.-% nicht überschreiten und beträgt vorzugsweise weniger als 1 Gew.-%, jeweils bezogen auf die Gesamtmasse der von ungebundenem Wasser verschiedenen Bestandteile der Salzmischung.

Die Herstellung der Salzmischung erfolgt in an sich bekannter Weise durch Vermischen der Bestandteile der Salzmischung in den gewünschten Mengenanteilen in hierfür geeigneten Vorrichtungen. Geeignete Vorrichtungen für das Vermengen der Komponenten der Salzmischung sind Fallmischer mit und ohne Einbauten wie Trommelmischer und Ringmischer, Schaufelmischer wie Trogmischer, Pflugschaufelmischer und Doppelwellenmischer sowie Schneckenmischer.

Bei der Verbindung A handelt es sich um Natriumcarbonat, das in wasserfreier Form oder in Form seiner Hydrate eingesetzt wird. Insbesondere ist die Verbindung A unter Natriumcarbonat-wasserfrei (Na₂CO₃), Natriumcarbonat-Monohydrat (Na₂CO₃ · H₂O) und Natriumcarbonat-Decahydrat (Na₂CO₃ · 10 H₂O) und deren Gemischen ausgewählt. Besonders bevorzugte Verbindung A ist das Natriumcarbonat-wasserfrei.

In einer ersten Gruppe von Ausführungsformen ist die Verbindung A alleiniges Additiv. In dieser ersten Gruppe von Ausführungsformen gilt für bevorzugte Verbindungen A das zuvor Gesagte. Die Menge an Natriumcarbonat liegt dann vorzugsweise im Bereich von 0,1 bis 1,5 Gew.-%, insbesondere im Bereich von 0,3 bis 1,2 Gew.-% und speziell im Bereich von 0,4 bis 1,1 Gew.-%, jeweils bezogen auf das Gesamtgewicht der von ungebundenem Wasser verschiedenen Bestandteile der Salzmischung und gerechnet als Na₂CO₃.

In einer zweiten Gruppe von Ausführungsformen enthält die Salzmischung neben der Verbindung A wenigstens eine Verbindung B als weiteres Additiv. In dieser zweiten Gruppe von Ausführungsformen gilt für bevorzugte Verbindungen A das zuvor gesagte. Die Menge an Natriumcarbonat liegt dann vorzugsweise im Bereich von 0,05 bis 1,45 Gew.-%, insbesondere im Bereich von 0,1 bis 1,0 Gew.-% und speziell im Bereich von 0,15 bis 0,85 Gew.-%, jeweils auf das Gesamtgewicht der von ungebundenem Wasser verschiedenen Bestandteile Salzmischung bezogen. Die Menge an Verbindung B beträgt vorzugsweise 0,05 bis 1,2 Gew.-%, insbesondere 0,2 bis 0,7 Gew.-%, speziell 0,25 bis 0,5 Gew.-%, bezogen auf das Gesamtgewicht der von ungebundenem Wasser verschiedenen Bestandteile der Salzmischung.

In dem erfindungsgemäßen Verfahren liegt Gesamtmenge an Verbindung A und Verbindung B vorzugsweise im Bereich von 0,1 bis 1,5 Gew.-%, insbesondere im Bereich von 0,3 bis 1,2 Gew.-% und speziell im Bereich von 0,4 bis 1,1 Gew.-%, jeweils bezogen auf das Gesamtgewicht der von ungebundenem Wasser verschiedenen Bestandteile der Salzmischung. Die Gesamtmenge an Natriumcarbonat und Verbindung B richtet sich vor allem nach der Menge der im Rohmaterial, d. h. in Polyhalit und Kaliumchlorid, als Verunreinigung enthaltenen Erdalkalimietallhalogenide.

In einer bevorzugten Gruppe von Ausführungsformen ist die Verbindung B aus der Gruppe der Alkalimetallmetaphosphate, Alkalimetallpolyphosphate, Dialkalimetallhydrogenphosphate, Alkalimetalldihydrogenphosphate und deren Gemischen, insbesondere aus der Gruppe bestehend aus Trinatriumorthophosphat, Natriummetaphosphat, Natriumpolyphosphat, Dinatriumhydrogenphosphat, Natriumdihydrogenphosphat, einschließlich deren Hydrate, und deren Gemischen ausgewählt. Beispiele für derartige Verbindungen B sind Trinatriumphosphat, Trinatriumphosphat-Dodecahydrat, Trinatriumphosphat-Hexahydrat, Natriumpyrophoshat, Natriumpyrophosphat-Dodecahydrat, Natriumtripolyphosphat (STPP), Natriumhexametaphosphat (SHMP, n = 6), Natriumtetrametaphosphat (n = 4), Natriumtrimetaphosphat (n = 3), Natriumdihydrogenphosphat, Natriumdihydrogenphosphat-Monohydrat, Natriumdihydrogenphosphat-Dihydrat und deren Gemische.

Besonders bevorzugte Verbindungen B sind Dinatriumhydrogenphosphat und seine Hydrate wie Dinatriumhydrogenphosphat-Dihydrat, Dinatriumhydrogenphosphat-Heptahydrat und Dinatriumhydrogenphosphat-Dodecahydrat und deren Gemische.

In einer weiteren bevorzugten Gruppe von Ausführungsformen ist die Verbindung B aus der Gruppe der Alkalimetallorthosilikate und Alkalimetallmetasilikate ausgewählt. Hierunter bevorzugt sind Tetranatriumorthosilikat und Dinatriummetasilikat und deren Gemische.

In einer weiteren Gruppe von Ausführungsformen ist die Verbindung B aus der Gruppe der Alkalimetallborate, Erdalkalimetallborate und Alkalimetall-Erdalkalimetall-Boraten, insbesondere aus der Gruppe der Natriumborate wie Borax, Calciumborate wie Ulexit und Natrium-Calciumborate wie Colemanit ausgewählt. Besonders bevorzugte Borate sind die Natriumborate und speziell Borax.

In einer Ausführungsform der Erfindung kann man eine feuchte Salzmischung in der Granulierung einsetzen, die zusätzlich zu dem in der Salzmischung enthaltenen Kristallwasser freies Wasser enthält und zwar vorzugsweise 0,1 bis 3 Gew.-%, insbesondere 0,2 bis 2,8 Gew.-%, und speziell 0,5 bis 2,5 Gew.-% freies Wasser, bezogen auf das Gesamtgewicht der von ungebundenem Wasser verschiedenen Bestandteile Salzmischung. Hierdurch wird die Festigkeit der Granulate erhöht und der Abrieb verringert. Insbesondere wird man dann eine feuchte Salzmischung einsetzen, wenn die Granulierung als eine Pressagglomeration durchführt.

Hierbei wird man eine Salzmischung einsetzen, die herstellungsbedingt eine Restfeuchte im Bereich von 0,1 bis 3,0 Gew.-%, insbesondere 0,2 bis 2,8 Gew.-%, und speziell 0,5 bis 2,5 Gew.-%, bezogen auf das Gewicht der Salzmischung aufweist. Man kann jedoch auch so vorgehen, dass man der Salzmischung vor der Granulierung, insbesondere der Pressagglomeration, 0,1 bis 3,0 Gew.-%, insbesondere 0,2 bis 2,8 Gew.-%, und speziell 0,5 bis 2,5 Gew.-%, bezogen auf das Gewicht der Salzmischung, Wasser zusetzt. Gegebenenfalls wird man bei der Zugabe des Wassers etwaige Restfeuchten der Salzmischung berücksichtigen, so dass die hier angegebenen Wassermengen auf die Gesamtmasse der festen Bestandteile der Salzmischung (einschließlich des gebundenen Kristallwassers) bezogen sind. Der hier verwendete Begriff "Restfeuchte" wird üblicherweise auch als Trockenverlust bezeichnet.

Sofern man der Salzmischung Wasser zusetzt, kann man das Wasser unmittelbar vor der Granulierung zugeben, z. B. unmittelbar vor der Aufgabe der Salzmischung auf die Presse. Häufig wird man jedoch das Wasser mit der Salzmischung vermischen und anschließend die feuchte Salzmischung der Granulierung, insbesondere der Pressagglomeration zuführen. Das Wasser kann der Salzmischung zugegeben werden, die bereits alle für die Granulierung benötigten Komponenten enthält. Man kann aber auch die Zugabe des Wassers und das Vermischen der festen Bestandteile der Salzmischung kombinieren, beispielsweise indem man das Wasser während des Vermischens der festen Bestandteile zusetzt oder das Wasser in Form einer Lösung eines der festen Bestandteile, z. B. eines Mikronährstoffs oder eines Bindemittels, zusetzt. Der Zusatz des Wassers kann in an sich bekannter Weise, z. B. durch Aufsprühen auf die festen Bestandteile der Salzmischung in hierfür geeigneten Vorrichtungen, z. B. in einer der oben genannten Mischvorrichtungen erfolgen.

Die eigentliche Durchführung der Granulierung kann in Analogie zu den aus dem Stand der Technik bekannten Agglomerationsverfahren erfolgen, die beispielsweise in Wolfgang Pietsch, Agglomeration Processes, Wiley - VCH, 1. Auflage, 2002 sowie in G. Heinze, Handbuch der Agglomerationstechnik, Wiley - VCH, 2000 sowie in Perry's Chemical Engineers' Handbook, 7. Auflage, McGraw-Hill, 1997, beschrieben sind. Insbesondere führt man die Granulierung als Pressagglomeration oder als Aufbauagglomeration durch.

Bei einer Granulierung mittels Aufbauagglomeration wird das behandelte polyhalithaltige Kaliumchlorid-Rohmaterial, welches Natriumcarbonat und wenigstens eine Verbindung B in den gewünschten Mengen enthält, durch Einwirkung mechanischer Kräfte in Bewegung versetzt und gegebenenfalls mit Wasser oder wässrigen Lösungen von Natriumcarbonat und Verbindung B während des Granuliervorgangs behandelt. Hierbei kann die Aufbauagglomeration in an sich bekannter Weise als Roll-, Misch- oder Fließbett-Agglomeration, insbesondere als Roll-Agglomeration, erfolgen. Bei der Roll-Agglomeration wird man das polyhalithaltige Kaliumchlorid-Rohmaterial, das gegebenenfalls bereits die Bestandteile Natriumcarbonat und Verbindung B enthält, in ein Gefäß mit geneigter Drehachse und kreisförmigem Querschnitt, vorzugsweise in eine Granuliertrommel oder auf einen Granulierteller, geben. Durch Rotieren des Gefäßes werden die Partikel des Feinsalzes in Bewegung versetzt. Die Behandlung mit dem Wasser bzw. den wässrigen Lösungen von Natriumcarbonat und Verbindung B erfolgt beispielsweise durch Sprühen auf das in Bewegung versetzte polyhalithaltige Kaliumchlorid-Rohmaterial. Hierbei erhält man ein vergleichsweise einheitlich rundes Granulat, das direkt einer Klassierung zugeführt werden kann.

Vorzugsweise erfolgt die Herstellung des Granulats durch eine Pressagglomeration der Salzmischung. Bei der Pressagglomeration wird die Salzmischung unter Anwendung von Druck kompaktiert bzw. verpresst. Zum Kompaktieren eignen sich grundsätzlich alle die für ähnliche Zwecke bekannten Pressen, wie beispielsweise Stempel-, Strang-, Loch- und Walzenpressen.

Insbesondere umfasst Pressagglomeration (i) ein Kompaktieren bzw. Verpressen der Salzmischung mittels einer geeigneten Presse, insbesondere einer Walzenpresse, (ii) gefolgt von einer Zerkleinerung der dabei anfallenden Schülpen und (iii) eine Klassierung des beim Zerkleinern anfallenden Granulats.

Vorzugsweise erfolgt die Kompaktierung unter Verwendung einer Walzenpresse. Bei Walzenpressen erfolgt die Kompaktierung im Spalt zweier gegenläufig rotierender Walzen. Die Walzenoberflächen können glatt, profiliert, z. B. geriffelt, gewellt oder gewaffelt, oder mit Formmulden ausgestattet sein. Eine etwaige Profilierung der Walzenoberfläche dient vor allem der Verbesserung des Einzugsverhältnisses in den Walzenspalt. Häufig wird man Walzenpressen mit glatter oder profilierter Walzenoberfläche einsetzen. In diesem Falle ist das primäre Agglomerationsprodukt ein aus dem Walzenspalt austretender bandartiger Strang, der auch als Schülpe bezeichnet wird.

Die für die Kompaktierung erforderlichen Presskräfte, die üblicherweise auf die Walzenbreite bezogen und als Linienkräfte angegeben werden, liegen in der Regel im Bereich von 1 bis 75 kN/cm, insbesondere im Bereich von 40 bis 70 kN/cm und bezogen auf 1000 mm Durchmesser und einer mittleren Schülpendicke von 10 mm. In der Regel wird die Walzenpresse bei einer Walzenumfangsgeschwindigkeit im Bereich von 0,2 bis 1,6 m/s betrieben. Üblicherweise erfolgt die Kompaktierung bei Temperaturen im Bereich von 80 bis 100 °C oder bei der Temperatur, die sich aufgrund der Einwirkung der mechanischen Kräfte auf das behandelte Kaliumchlorid-Rohmaterial (d. h. das behandelte Feinsalz) einstellt. Gegebenenfalls wird man das der Granulierung zugeführte Gut auf die für die Kompaktierung gewünschte Temperatur vorwärmen bzw. hat noch Restwärme z. B. aus der Trocknung.

Gegebenenfalls kann die Kompaktierung mehrstufig, d. h. über mehrere, sequentiell angeordnete Walzenpressen, durchgeführt werden.

Beim Kompaktieren der Salzmischung mit einer Walzenpresse werden in der Regel Schülpen erhalten, die zur Einstellung der Partikelgröße des erhaltenen Granulates einer Zerkleinerung unterworfen werden. Die Zerkleinerung der Schülpen kann in an sich bekannter Weise, beispielsweise durch Vermahlen in hierfür geeigneten Vorrichtungen erfolgen, beispielsweise in Prallbrechern, Prallmühlen oder Walzenbrechern.

In der Regel schließt sich dem eigentlichen Granuliervorgang eine Klassierung des Granulates an. Hierbei erfolgt eine Auftrennung des Granulates in Granulate mit der spezifikationsgerechten Partikelgröße, kleineren Granulaten (Feinanteil) und gegebenenfalls gröberen Granulaten (Grobanteil). Spezifikationsgerecht ist insbesondere ein Kaliumchlorid-Granulat, in dem wenigstens 90 Gew.-% der Granulatpartikel eine Partikelgröße beziehungsweise einen Partikeldurchmesser im Bereich von 0,5 bis 8 mm und insbesondere im Bereich von 2 bis 5 mm aufweisen. Die Klassierung kann nach üblichen Verfahren erfolgen, insbesondere durch Sieben.

Das bei der Klassierung anfallende, nicht spezifikationsgerechte Granulat-Material, das sogenannte Rückgut, wird in der Regel in den Prozess zurückgeführt.

Das so erhaltene Granulat kann in an sich bekannter Weise konfektioniert, z. B. verpackt und transportiert werden.

In einer bevorzugten Ausführungsform der Erfindung kann sich der Pressagglomeration eine Behandlung des frisch hergestellten Granulats mit Wasser anschließen. Diese Nachbehandlung wird auch als Glazing bezeichnet. Sofern das Granulat klassiert wird, kann die Nachbehandlung sowohl vor als auch nach der Klassierung durchgeführt werden. Sofern die Pressagglomeration eine Zerkleinerungsstufe umfasst, erfolgt die Nachbehandlung in der Regel nach der Zerkleinerung und vor oder im Anschluss an eine etwaige Klassierung.

Für die Nachbehandlung wird man das Granulat mit einer geringen Wassermenge befeuchten. Die Wassermenge wird in der Regel so gewählt, dass sie vom Granulat vollständig adsorbiert wird. Vorzugsweise wird man zur Nachbehandlung das Wasser in einer Menge von 0,1 bis 3,0 Gew.-%, insbesondere 0,2 bis 2,5 Gew.-%, und speziell 0,5 bis 2,0 Gew.-%, bezogen auf die Gesamtmasse des frisch hergestellten Granulats einsetzen. Sofern man für die Herstellung des Granulats eine feuchte Salzmischung eingesetzt hat, wird man die Wassermenge für die Nachbehandlung vorzugsweise so wählen, dass die Gesamtmenge an freiem Wasser im behandelten Granulat, d. h. Wasser, das nicht als Kristallwasser gebunden vorliegt, im Bereich von 0,1 bis 5 Gew.-%, insbesondere 0,2 bis 4 Gew.-% und speziell 0,5 bis 3,5 Gew.-%, bezogen auf die Gesamtmasse des frisch hergestellten Granulats liegt.

Für die Nachbehandlung wird man in der Regel so vorgehen, dass man das Wasser möglichst gleichmäßig, insbesondere in fein verteilter Form, z. B. durch Aufsprühen bzw. in zerstäubter Form, auf das fertige Granulat aufbringt. Hierzu wird man üblicherweise das Wasser mittels ein oder mehrerer geeigneter Zerstäuber, z. B. feststehende oder rotierende Düsen, versprühen bzw. zerstäuben. Hierbei hat es sich als vorteilhaft erwiesen, wenn das Granulat während des Aufbringens des Wassers, insbesondere des zerstäubten Wassers, bewegt wird, um einen gleichmäßigeren Auftrag des Wassers auf die Oberfläche der Granulat-Partikel zu erzielen. Insbesondere wird man so vorgehen, dass man das Granulat in einer Relativbewegung durch einen Sprühkegel oder einen Sprühvorhang aus mehreren sich überlagernden Sprühkegeln führt. Beispielsweise kann man zum Aufbringen des Wassers so vorgehen, dass man das Granulat mittels eines Transportbands durch einen Bereich führt, in dem Wasser versprüht bzw. zerstäubt wird, beispielsweise indem man einen oder mehrere Sprühkegel oder einen oder mehrere Sprühvorhänge auf dem sich bewegenden Transportband erzeugt. Auch kann man beispielsweise am Übergabepunkt zwischen zwei Transportbändern einen Bereich, in dem Wasser versprüht bzw. zerstäubt wird, erzeugen. Hierdurch wird ein besonders gleichmäßiges Aufbringen des Wassers auf die Oberfläche der Granulat-Partikel erreicht. Grundsätzlich ist es auch möglich, das Wasser in Mischvorrichtungen, beispielsweise Fallmischer mit und ohne Einbauten wie Trommelmischer und Ringmischer, Schaufelmischer wie Trogmischer, Pflugschaufelmischer und Doppelwellenmischer, auf die Oberfläche der Granulat-Partikel aufzubringen. Vorzugsweise wird man beim Aufbringen des Wassers die mechanische Beanspruchung des Granulats möglichst gering halten.

Das für das Granulieren und/oder für die Nachbehandlung des Granulats verwendete Wasser kann grundsätzlich reines, z. B. entionisiertes Wasser, aber auch Leitungswasser oder Prozesswasser sein.

Gegebenenfalls kann sich der Nachbehandlung ein Trocknungsschritt anschließen, beispielsweise, indem man einen Gasstrom, z. B. Frischluft, durch das Granulat leitet oder durch Wärmezufuhr oder durch eine Kombination dieser Maßnahmen.

Die nach dem erfindungsgemäßen Verfahren erhältlichen Kalium, Magnesium und Sulfat enthaltenden Granulate enthalten naturgemäß, neben Kaliumchlorid, Natriumcarbonat und wenigstens eine Verbindung B (bzw. deren Umwandlungsprodukte) in der im erfindungsgemäßen Verfahren eingesetzten Menge. Insbesondere besteht das erfindungsgemäß erhältliche Kalium, Magnesium und Sulfat enthaltende Granulat zu wenigstens 80,1 Gew.-%, insbesondere wenigstens 85,3 Gew.-% und speziell wenigstens 98 Gew.-%, bezogen auf wasserfreies Granulat, aus:
i) Kaliumchlorid,
ii) Polyhalit;
iii) dem Natriumcarbonat und/oder dessen Reaktionsprodukten wie MgCO₃ oder CaCO₃, in einer Menge von 0,05 bis 1,5 Gew.-%, insbesondere in einer Menge von 0,1 bis 1,2 Gew.-%, speziell 0,15 bis 1,1 Gew.-%, gerechnet als Na₂CO₃, und
iv) gegebenenfalls der Verbindung B oder dessen Hydrolyse/Umwandlungsprodukte, in einer Menge von 0,05 bis 1,2 Gew.-%, insbesondere in einer Menge von 0,2 bis 0,7 Gew% und speziell in einer Menge von 0,25 bis 0,5 Gew.-%, gerechnet als Verbindung B,
wobei Polyhalit und Kaliumchlorid in einem Massenverhältnis im Bereich von 1 : 3 bis 3 : 1, speziell im Bereich von 1 : 2 bis 1,5 : 1 enthalten sind und ihre Gesamtmasse wenigstens 80 Gew.-%, insbesondere wenigstens 85 Gew.-% und speziell wenigstens 90 Gew.-% ausmacht, wobei alle Angaben in Gew.-% sich auf das Gesamtgewicht der von ungebundenem Wasser verschiedenen Bestandteile der Salzmischung beziehen und wobei die Gesamtmenge an Verbindung A und Verbindung B vorzugsweise im Bereich von 0,1 bis 1,5 Gew.-%, insbesondere im Bereich von 0,3 bis 1,2 Gew.-% und speziell im Bereich von 0,4 bis 1,1 Gew.-%, jeweils auf das Gesamtgewicht der von ungebundenem Wasser verschiedenen Bestandteile des Granulats bezogen sind.

Für die relativen Mengenanteile der Verbindungen A und B im Granulat gilt das für die erste und zweite Gruppe von Ausführungsformen Gesagte sinngemäß.

Daneben enthält das erfindungsgemäß erhältliche Kalium, Magnesium und Sulfat enthaltende Granulat die im Kaliumchlorid-Rohmaterial/Feinsalz enthaltenen Verunreinigungen, z. B. Magnesium-Salze und/oder Calcium-Salze in den oben angegebenen Mengenverhältnissen.

Weiterhin kann das Kalium, Magnesium und Sulfat enthaltende Granulat auch Mikronährstoffe wie B, Mn, Mo, Cu, Zn und Fe oder Gemische daraus enthalten. Die Menge an Mikronährstoffen wird in der Regel 3 Gew.-%, bezogen auf das wasserfreie Kaliumchlorid-Granulat und jeweils gerechnet als Element, nicht überschreiten. Beispielsweise kann das erfindungsgemäß erhältliche Kaliumchlorid-Granulat 0,001 bis 3 Gew.-% Bor, bezogen auf die von ungebundenem Wasser verschiedenen Bestandteile des Granulats und gerechnet als B₂O₃, enthalten.

Wie bereits erwähnt, zeichnen sich die erfindungsgemäßen Kalium, Magnesium und Sulfat enthaltenden Granulate durch eine hohe mechanische Stabilität auch bei Lagerung in feuchter Atmosphäre, z. B. bei relativen Feuchten/Luftfeuchtigkeiten bei 72 % RH aus. Auch unter diesen Bedingungen zeigen die erfindungsgemäßen Kalium, Magnesium und Sulfat enthaltenden Granulate nur ein geringes Staubverhalten und eine hohe Bruch-/Berstfestigkeit, eine geringe Feuchteaufnahme bzw. einen geringen Abrieb.

Die erfindungsgemäß erhältlichen Granulate sind daher nicht nur aufgrund ihrer Bestandteile, insbesondere aufgrund der gleichzeigen Anwesenheit von Kalium, Magnesium und Schwefel, sondern auch aufgrund ihrer mechanischen Festigkeit und ihrer Unempfindlichkeit gegenüber Feuchtigkeit als Düngemittel geeignet. Dementsprechend können die erfindungsgemäß erhältlichen Granulate insbesondere in den für K+Mg+S enthaltenden Düngemittel üblichen Düngemittelanwendungen eingesetzt werden.

Die folgenden Beispiele dienen der Erläuterung der Erfindung.

Abkürzungen:
BF: Bruchfestigkeit/Berstfeste
Bsp.: Beispiel
WQS: Weizenquellstärke

Die Bestimmung der Korngrößenverteilung erfolgte auf einer analytischen Vibrationssiebmaschine (Typ Retsch AS 200 control).

Der Trockenverlust TV wurde in Anlehnung an DIN EN 12880:2000 bestimmt, indem man eine Probe von etwa 30 g in einem Trockenschrank bei Temperaturen im Bereich von 105 ± 5 °C bei Umgebungsdruck 2 h trocknete und das Gewicht der Probe vor und nach der Trocknung bestimmte.

Die Berstfeste bzw. Bruchfestigkeit wurde mit Hilfe des Tabletten-Bruchfestigkeitstesters Typ TBH 425D der Firma ERWEKA auf Basis von Messungen an 56 Einzelgranalien unterschiedlicher Partikelgröße (Fraktion 2,5 - 3,15 mm) ermittelt und der Mittelwert berechnet. Bestimmt wurde die Kraft, die erforderlich war, um die Granalie zwischen Stempel und Platte des Bruchfestigkeitstesters zu zerbrechen. Granalien mit einer Berstfeste > 400 N und solche mit einer Berstfeste < 4 N wurden bei der Mittelwertbildung nicht berücksichtigt.

Die Werte für den Abrieb wurden mit dem Rolltrommelverfahren nach Busch bestimmt. Hierzu wurden 50 g des Granulats mit einer Korngrößenfraktion von 2,5 bis 3,15 mm zusammen mit 70 Stahlkugeln (Durchmesser 10 mm, 283 g) in eine Rolltrommel eines handelsüblichen Abriebtesters, z. B. ERWEKA, Typ TAR 20, gegeben und 10 min bei 40 U*min⁻¹ gedreht. Anschließend wurde der Inhalt der Trommel auf ein Sieb mit einer Maschenweite von 5 mm, unter dem ein Sieb mit einer Maschenweite von 0,5 mm angeordnet war, 1 min auf einer Siebmaschine (Typ Retsch AS 200 control) gesiebt. Der abgesiebte Feinanteil entspricht dem Abrieb.

Es wurden die folgenden Einsatzstoffe verwendet:
Kaliumchlorid (KCl):
Unkonfektioniertes Kaliumchlorid mit folgender Spezifikation:
KCl-Gehalt von 96,1 Gew.-% (= 60,7 % K₂O).
Gesamtgehalt Ca + Mg: 0,16 Gew.-%
Trocknungsverlust bei 105 °C: < 0,1 Gew.-%.
Das Kaliumchlorid wies folgende Korngrößenverteilung auf:
   d₁₀: 52,8 µm, d₅₀: 100,4 µm, d₉₀: 201,9 µm.
Polyhalit (K₂Ca₂Mg[SO₄]₄·2H₂O):

| | |
|---|---|
| Gehalt Kalium: | 11,2 Gew.-% |
| Gehalt Magnesium: | 4,0 Gew.-% |
| Gehalt Calcium: | 12,5 Gew.-% |
| Gehalt Sulfat: | 57,4 Gew.-% |
| Gehalt Chlorid: | 3,7 Gew.-% |
| Gehalt Natrium: | 2,2 Gew.-% |

Trocknungsverlust bei 105 °C: < 0,2 Gew.-%. Glühverlust bei 550 °C: 6,2 Gew.-%. Das Polyhalit wies folgende Korngrößenverteilung auf:
d₁₀: 20,6 µm, d₅₀: 509,2 µm, d₉₀: 1046,0 µm.

### Herstellung der Granulate mittels Pressagglomeration:

Für die Pressagglomeration wurde eine Laborpresse der Fa. Bepex, Typ L200/50 eingesetzt, die zwei gegenläufig rotierende Walzen mit stäbchenförmigen Vertiefungen auf der Walzenoberfläche aufwies (Walzendurchmesser 200 mm, Arbeitsbreite 50 mm). Die Laborpresse wurde mit einer spezifischen Presskraft von 28 kN/cm und einer Walzendrehzahl von 6,2 U/min betrieben. Die Zufuhr der Salzmischung erfolgte mittels einer über den Presswalzen angeordneten Stopfschnecke. Die Aufgaberate an Salzmischung betrug etwa 0,5 bis 2 kg/min.

Die Zerkleinerung der beim Kompaktieren mittels der Laborpresse anfallenden Schülpen erfolgte mit einer Prallmühle der Fa. Hazemag. Die Prallmühle wies 2 Prallwerke auf und hatte einen Rotordurchmesser von 300 mm. Die Spaltweite für das vordere Prallwerk wurde auf 10 mm und für das hintere Prallwerk auf 5 mm eingestellt. Die Prallmühle wurde mit einer Umfangsgeschwindigkeit des Rotors von 15 m/s betrieben. Die Zerkleinerung erfolgte unmittelbar im Anschluss an die Herstellung der Schülpen. Der Durchsatz an Schülpen lag bei etwa 0,5 bis 2 kg/s.

Anschließend wurde das Material mit einer handelsüblichen Siebvorrichtung klassiert, die Fraktion mit Korngröße 2 - 5 mm (Produkt) abgetrennt. Die Fraktion mit Korngröße < 2 mm kann zur Aufgabe zurückgeführt werden (Feingut). Der Anteil mit Korngröße > 5 mm (Grobgut) kann aufgemahlen und ebenfalls zurückgeführt werden. Für die Bestimmung der Bruchfestigkeit bzw. Berstfeste (BF) der Granulate wurde eine Testfraktion (Testgranulat) mit einer Korngröße von 2,5 bis 3,15 mm ausgesiebt.

### Bewetterung im Klimaschrank:

Zur Bewetterung wurden die Proben für 24 h bei 72 % r. F. bei 20 °C in einen Klimaschrank Clime Event C/180/40/3 der Firma Weisstechnik gelagert. Anschließend wurde die Feuchteaufnahme und die Kornhärte bestimmt.

### Beispiele A0 bis A11 (Beispiel A3 erfindungsgemäß, Beispiele AO-A2 und A4 - A11 nicht erfindungsgemäß):

2200 g Kaliumchlorid, 1800 g Polyhalit und ggf. 40 g Additiv wurden unter Zusatz von 200 g Wasser in einen Intensivmischer gegeben und 1 min gemischt. Die Mischung wurde danach über Nacht bei 105 °C getrocknet und anschließend zerkleinert, mittels der oben beschriebenen Laborpresse in der oben beschriebenen Weise mit einer Aufgaberate von 0,5 bis 2 kg/min zu Schülpen gepresst, die Schülpen aufgemahlen und die zerkleinerten Schülpen klassiert.

Anschließend wurde das erhaltene Granulat der gewünschten Korngrößenfraktion unter Umgebungsbedingungen gelagert und nach 1 Tag, 7 Tagen bzw. 14 Tagen Kornhärte und Abrieb bestimmt. Die Ergebnisse sind in Tabelle 1 zusammengestellt.

Zudem wurde das erhaltene Granulat zur Bewetterung für 24 h bei 72 % r. F. bei 20 °C in einen Klimaschrank gelagert. Anschließend wurde die Feuchteaufnahme und die Kornhärte bestimmt. Die Ergebnisse sind ebenfalls in Tabelle 1- zusammengestellt.

### Beispiele B1 bis B6 (erfindungsgemäß):

2200 g Kaliumchlorid, 1800 g Polyhalit, 16 g Additiv B und 8 g Na₂CO₃ wasserfrei wurden unter Zusatz von 200 g Wasser in einen Intensivmischer gegeben und 1 min gemischt. Der Massenanteil des Additives und Na₂CO₃ wasserfrei beträgt jeweils 0,4 Gew.-% (16 g) und 0,2 Gew.-% (8 g) bezogen auf das Gesamtgewicht der KCl und Polyhalit (4000 g). Die Mischung wurde danach über Nacht bei 105 °C getrocknet, anschließend zerkleinert und mittels der oben beschriebenen Laborpresse in der oben beschriebenen Weise mit einer Aufgaberate von 0,5 bis 2 kg/min gepresst, aufgemahlen und klassiert.

Abrieb, Kornhärte und Feuchteaufnahme (Tabelle 2) wurden in der für die Beispiele A0 - A11 beschriebenen Weise bestimmt.

### Beispiele C1 bis C9 (erfindungsgemäß):

2200 g Kaliumchlorid, 1800 g Polyhalit, sowie die in Tabelle 3 angegebenen Mengen an Dinatriumhydrogenphosphat und Na₂CO₃ wasserfrei wurden in dem angegebenen Massenverhältnis unter Zusatz von 200 g Wasser in einen Intensivmischer gegeben und 1 min gemischt. Die Mischung wurde danach über Nacht bei 105 °C getrocknet und anschließend zerkleinert und mittels der oben beschriebenen Laborpresse in der oben beschriebenen Weise mit einer Aufgaberate von 0,5 bis 2 kg/min gepresst, aufgemahlen und klassiert.

Abrieb, Kornhärte und Feuchteaufnahme (Tabelle 3) wurden in der für die Beispiele A0 - A11 beschriebenen Weise bestimmt.

### Beispiel D1:

2200 g Kaliumchlorid, 1800 g Polyhalit, sowie 40 g Dinatriumhydrogenphosphat und 40 g Na₂CO₃ wasserfrei wurden ohne Zusatz von Wasser in einen Intensivmischer gegeben und 1 min gemischt. Die Mischung wurde danach über Nacht bei 105 °C getrocknet und anschließend zerkleinert und mittels der oben beschriebenen Laborpresse in der oben beschriebenen Weise mit einer Aufgaberate von 0,5 bis 2 kg/min gepresst, aufgemahlen und klassiert.

Abrieb, Kornhärte und Feuchteaufnahme (Tabelle 4) wurden in der für die Beispiele A0 - A11 beschriebenen Weise bestimmt.

### Beispiele E1 - E3 (erfindungsgemäß) und Beispiel E4 (nicht erfindungsgemäß):

Kaliumchlorid, Polyhalit, jeweils in den in Tabelle 5 angegebenen Massenverhältnissen sowie 40 g Dinatriumhydrogenphosphat und 40 g Na₂CO₃ wasserfrei wurden unter Zusatz von 200 g Wasser in einen Intensivmischer gegeben und 1 min gemischt. Die Mischung wurde danach über Nacht bei 105 °C getrocknet und anschließend zerkleinert und mittels der oben beschriebenen Laborpresse in der oben beschriebenen Weise mit einer Aufgaberate von 0,5 bis 2 kg/min gepresst, aufgemahlen und klassiert.

Abrieb, Kornhärte und Feuchteaufnahme (Tabelle 5) wurden in der für die Beispiele A0 - A11 beschriebenen Weise bestimmt.

### Beispiele F1 - F4 Herstellung der Granulate mittels Rollgranulierung:

Zunächst wurden 450 g Polyhalit, 550 g Kaliumchlorid (KCl), sowie ggf. Dinatriumhydrogenphosphat und ggf. Na₂CO₃ wasserfrei mit der Granulierlösung (80 g Wasser oder 100 g einer 10 gew.-%igen Lösung von Weizenquellstärke in Wasser; WQS-Lösung) in einem Intensivmischer homogen zu einer feuchten Salzzusammensetzung vermischt. Die verwendete Granulierlösung wie die Mengen an Additiven sind in Tabelle 6 aufgeführt.

Zur Durchführung der Rollgranulierung wurden die jeweils erhaltene feuchte Salzzusammensetzung in einen Granulierteller (Durchmesser: 500 mm, Bordwandhöhe: 85 mm, Neigungswinkel: 48°) gegeben, der mit einer Drehzahl von 35 U/min rotierte.

Dann wurden mittels einer Druckluft-Sprühpistole die in Tabelle 6 angegebene Menge Wasser (Tellerwasser TW) pro 1 kg der von Wasser verschiedenen Bestandteile der Salzzusammensetzung kontinuierlich über einen Zeitraum von 10 min zu der Salzzusammensetzung gegeben. Die Mengen an Wasser die in den einzelnen Beispielen eingesetzt wurden, sind ebenfalls in Tabelle 6 zu finden.

Das so erhaltene feuchte Granulat wurde anschließend bei 35 °C über 16 h getrocknet. Anschließend wurde das erhaltene Granulat mit einer handelsüblichen Siebvorrichtung klassiert, die Fraktion mit Korngröße 2 bis 5 mm (Produkt) abgetrennt. Die Fraktion mit Korngröße < 2 mm kann zur Aufgabe zurückgeführt werden (Feingut). Der Anteil mit Korngröße > 5 mm (Grobgut) kann aufgemahlen und ebenfalls zurückgeführt werden. Für die Bestimmung der Bruchfestigkeit bzw. Berstfeste der Granulate wurde eine Testfraktion (Testgranulat) mit einer Korngröße von 2,5 bis 3,15 mm ausgesiebt.

Anschließend wurde das erhaltene Granulat unter Umgebungsbedingungen gelagert und nach 1 Tag bzw. 7 Tagen Abrieb, Kornhärte und Feuchteaufnahme wurden in der für die Beispiele F1 - F4 beschriebenen Weise bestimmt. Die Ergebnisse sind in Tabelle 6 zusammengestellt.

Alle Beispiele und Vergleichsbeispiele zeigen, dass durch die erfindungsgemäße Kombination der Additive A und B die Bruchfestigkeit/Berstfeste der Polyhalit-Kaliumchlorid-Granulate bei Lagerung unter hoher Luftfeuchte gegenüber der alleinigen Anwendung der Additive A und B signifikant verbessert wird. Außerdem wird durch die erfindungsgemäße Kombination der Additive A und B im Vergleich zur alleinigen Anwendung der Additive A und B die Feuchteaufnahme signifikant verringert.

**Tabelle 1: Abrieb und Kornhärte der erfindungsgemäßen Granulate ohne Additiv (A0) bzw. mit verschiedenen Additiven ohne Na₂CO₃ (nicht erfindungsgemäß)**

| | | Trockenlagerung 1) | | | | | | Bewettert 2) | | |
|---|---|---|---|---|---|---|---|---|---|---|
| | Additiv | Abrieb | BF | Abrieb | BF | Abrieb | BF | Feuchteaufnahme | Anzahl | BF |
| Bsp. | Name | 1 d | | 7 d | | 14 d | | | | |
| | | [Gew.-%] | [N] | [Gew.-%] | [N] | [Gew.-%] | [N] | [Gew.-%] | [St.] | [N] |
| A 0 | ohne Additiv ³⁾ | 19 | 45 | 14 | 50 | 15 | 50 | 2,1 | 47 | 12,0 |
| A 1 | Dinatriumhydrogenphosphat ³⁾ | 19 | 40 | 16 | 43 | 16 | 51 | 1,4 | 48 | 22,8 |
| A 2 | Trinatriumphosphat ³⁾ | 20 | 41 | 17 | 41 | 14 | 42 | 1,5 | 46 | 18,7 |
| A3 | Na₂CO₃, wasserfrei | 22 | 35 | 18 | 46 | 17 | 49 | 1,6 | 48 | 19,7 |
| A 5 | Natriumhexametaphosphat ³⁾ | 18 | 44 | 16 | 46 | 16 | 45 | 2,6 | 47 | 21,1 |
| A 6 | Natriumtrimetaphosphat ³⁾ | 21 | 45 | 18 | 40 | 17 | 44 | 1,5 | 53 | 20,5 |
| A 7 | Natriumpyrophosphat ³⁾ | 20 | 42 | 17 | 37 | 18 | 39 | 0,9 | 52 | 25,2 |
| A 8 | Natriumtripolyphosphat ³⁾ | 20 | 40 | 16 | 44 | 18 | 38 | 1,1 | 49 | 18,9 |
| A 9 | Natriumorthosilikat ³⁾ | 21 | 42 | 17 | 46 | 16 | 35 | 1,4 | 47 | 22,2 |
| A10 | Dinatriummetasilikat ³⁾ | 21 | 38 | 17 | 41 | 11 | 37 | 1,2 | 50 | 23,7 |
| A 11 | Dinatriumtetraborat ³⁾ | 20 | 40 | 18 | 46 | 18 | 42 | 1,3 | 47 | 22,0 |

| | | | | | | | | | | |
|---|---|---|---|---|---|---|---|---|---|---|
| 1) nach jeweils 1 Tag, 7 Tagen und 14 Tagen bei trockener Lagerung 2) Bewettert 72 r. F. 24 h 20 °C 3) Referenzbeispiele, nicht erfindungsgemäß | | | | | | | | | | |

**Tabelle 2: Abrieb und Kornhärte der erfindungsgemäßen Granulate mit verschiedenen Additiven (0,4 Gew.-%) und Na₂CO₃ wasserfrei (0,2**

| | | Trockenlagerung 1) | | | | | | Bewettert 2) | | |
|---|---|---|---|---|---|---|---|---|---|---|
| | Additiv B | Abrieb | BF | Abrieb | BF | Abrieb | BF | Feuchteaufnahme | Anzahl | BF |
| Bsp. | Name | 1 d | | 7 d | | 14 d | | | | |
| | | [Gew.-%] | [N] | [Gew.-%] | [N] | [Gew.-%] | [N] | [Gew.-%] | [St.] | [N] |
| B 1 | Dinatriumhydrogenphosphat | 19 | 45 | 14 | 51 | 14 | 55 | 0,5 | 49 | 26,2 |
| B 2 | Natriumtrimetaphosphat | 23 | 34 | 17 | 42 | 17 | 46 | 0,7 | 48 | 20,0 |
| B 3 | Natriumorthosilikat | 23 | 36 | 17 | 44 | 16 | 39 | 0,5 | 54 | 24,5 |
| B 4 | Dinatriummetasilikat | 22 | 36 | 17 | 43 | 16 | 43 | 0,6 | 45 | 24,7 |
| B 5 | Dinatriumtetraborat | 21 | 35 | 16 | 42 | 15 | 45 | 0,8 | 47 | 16,5 |

| | | | | | | | | | | |
|---|---|---|---|---|---|---|---|---|---|---|
| Gew.-%) 1) nach jeweils 1 Tag, 7 Tagen und 14 Tagen bei trockener Lagerung 2) Bewettert 72 r. F. 24 h 20 °C | | | | | | | | | | |

**Tabelle 3: Abrieb und Kornhärte der erfindungsgemäßen Granulate mit Dinatriumhydrogenphosphat und Na₂CO₃ wasserfrei in verschiedenen Massenverhältnissen**

| | Additive | | Trockenlagerung 1) | | | | | | Bewettert 2) | | |
|---|---|---|---|---|---|---|---|---|---|---|---|
| | Na₂HPO₄ | Na₂CO₃ | Abrieb | BF | Abrieb | BF | Abrieb | BF | Feuchteaufnahme | Anzahl | BF |
| Bsp. | | | 1 d | | 7 d | | 14 d | | | | |
| | [g] | [g] | [Gew.-%] | [N] | [Gew.-%] | [Gew.-%] | [St.] | [N] | [Gew.-%] | [St.] | [N] |
| C 1 | 40 | 40 | 16 | 46 | 14 | 56 | 12 | 38 | 0,6 | 47 | 33,1 |
| C 2 | 20 | 40 | 17 | 43 | 14 | 42 | 13 | 43 | 0,6 | 47 | 26,9 |
| C 3 | 10 | 40 | 19 | 44 | 16 | 45 | 14 | 47 | 0,6 | 45 | 30 |
| C 4 | 4 | 40 | 18 | 41 | 16 | 45 | 14 | 43 | 0,7 | 48 | 24,2 |
| C 5 | 16 | 40 | 19 | 45 | 15 | 42 | 14 | 50 | 0,6 | 48 | 34,6 |
| C 6 | 16 | 20 | 17 | 47 | 14 | 48 | 14 | 48 | 0,5 | 50 | 27 |
| C 7 | 16 | 10 | 19 | 42 | 17 | 39 | 16 | 38 | 0,4 | 45 | 30,9 |
| C 8 | 16 | 4 | 18 | 48 | 16 | 42 | 15 | 48 | 0,4 | 48 | 28,7 |
| C 9 | 4 | 4 | 21 | 42 | 18 | 39 | 17 | 39 | 0,5 | 48 | 19,9 |

| | | | | | | | | | | | |
|---|---|---|---|---|---|---|---|---|---|---|---|
| 1) nach jeweils 1 Tag, 7 Tagen und 14 Tagen bei trockener Lagerung 2) Bewettert 72 r. F. 24 h 20 °C | | | | | | | | | | | |

**Tab. 4: Abrieb und Kornhärte der erfindungsgemäßen Granulate mit Dinatriumhydrogenphosphat (40 g) und Na₂CO₃ wasserfrei (40 g) ohne Wasserzusatz**

| | Trockenlagerung 1) | | | | | | Bewettert 2) | | |
|---|---|---|---|---|---|---|---|---|---|
| | Abrieb | BF | Abrieb | BF | Abrieb | BF | Feuchteaufnahme | Anzahl | BF |
| Bsp. | 1 d | | 7 d | | 14 d | | | | |
| | [Gew.-%] | [N] | [Gew.-%] | [N] | [Gew.-%] | [N] | [Gew.-%] | [St.] | [N] |
| D 1 | 28 | 36 | 20 | 38 | 18 | 35 | 0,9 | 45 | 31 |

| | | | | | | | | | |
|---|---|---|---|---|---|---|---|---|---|
| 1) nach jeweils 1 Tag, 7 Tagen und 14 Tagen bei trockener Lagerung 2) Bewettert 72 r. F. 24 h 20 °C | | | | | | | | | |

**Tabelle 5: Abrieb und Kornhärte der erfindungsgemäßen Granulate in verschiedenen Polyhalit/KCl-Massenverhältnissen**

| | | | Trockenlagerung 1) | | | | | | Bewettert 2) | | |
|---|---|---|---|---|---|---|---|---|---|---|---|
| | | | Abrieb | BF | Abrieb | BF | Abrieb | BF | Feuchteaufnahme | Anzahl | BF |
| Bsp. | Polyhalit | KCl | 1 d | | 7 d | | 14 d | | | | |
| | [g] | [g] | [Gew.-%] | [N] | [Gew.-%] | [N] | [Gew.-%] | [N] | [Gew.-%] | [St.] | [N] |
| E 1 | 1000 | 3000 | 10 | 57 | 8 | 64 | 8 | 63 | 0,4 | 45 | 46 |
| E 2 | 1800 | 2200 | 16 | 46 | 14 | 56 | 12 | 38 | 0,6 | 47 | 33,1 |
| E 3 | 3000 | 1000 | 60 | 26 | 50 | 37 | 46 | 34 | 1,2 | 40 | 19 |
| E 4 ³⁾ | 3600 | 400 | 80 | 22 | 76 | 25 | 72 | 24 | 1,6 | 42 | 13 |

| | | | | | | | | | | | |
|---|---|---|---|---|---|---|---|---|---|---|---|
| 1) nach jeweils 1 Tag, 7 Tagen und 14 Tagen bei trockener Lagerung 2) Bewettert 72 r. F. 24 h 20 °C 3) Vergleichsbeispiel | | | | | | | | | | | |

**Tabelle 6: Abrieb und Kornhärte der erfindungsgemäßen Granulate mit Dinatriumhydrogenphosphat und Na₂CO₃ wasserfrei durch Rollagglomeration.**

| | | | | | Trockenlagerung 1) | | Bewettert 2) | | |
|---|---|---|---|---|---|---|---|---|---|
| | GL 4) | TW 5) | Na₂HPO₄ | Na₂CO₃ | Abrieb | BF | Feuchteaufnahme | Anzahl | BF |
| Bsp. | | [g] | [g] | [g] | [Gew.-%] | [N] | [Gew.-%] | [St.] | [N] |
| F1 ³⁾ | 80 ml Wasser | 30 | 0 | 0 | 37 | 19 | 2,5 | 16 | 15 |
| F2 | 80 ml Wasser | 48 | 10 | 10 | 37 | 18 | 0,5 | 55 | 10 |
| F3 ³⁾ | 100 ml WQS-Lösung | 55 | 0 | 0 | 4 | 22 | 2,1 | 33 | 6 |
| F4 | 100 ml WQS-Lösung | 40 | 10 | 10 | 4 | 22 | 0,8 | 55 | 9 |

| | | | | | | | | | |
|---|---|---|---|---|---|---|---|---|---|
| 1) nach jeweils 3 Tagen, 2) Bewettert 72 r. F. 24 h 20 °C 3) Vergleichsbeispiel 4) Granulierlösung (GL) 5) Wasserzugabe während Granulierung (Tellerwasser, TW) | | | | | | | | | |

## Patentansprüche

1. Verfahren zur Herstellung von Kalium, Magnesium und Sulfat enthaltenden Granulaten, umfassend die Granulierung einer Salzmischung enthaltend
a) 80 bis 99,9 Gew.-% eines Gemischs aus Polyhalit mit Kaliumchlorid, wobei das Massenverhältnis von feinteiligem Polyhalit zu feinteiligem Kaliumchlorid im Bereich von 1 : 3 bis 3 : 1,
b) 0,05 bis 1,5 Gew.-% Natriumcarbonat als Vebindung A, gerechnet als Na₂CO₃,
c) gegebenenfalls 0,05 bis 1,2 Gew.-% wenigstens einer Verbindung B aus der Gruppe der Alkalimetallorthophosphate, Alkalimetallmetaphosphate, Alkalimetallpolyphosphate, Dialkalimetallhydrogenphosphate, Alkalimetalldihydrogenphosphate, (Erd)alkalimetallborate, Alkalimetallorthosilikate und der Alkalimetallmetasilikate und deren Gemischen,
wobei die Angaben in Gew.-% sich auf das Gesamtgewicht der von ungebundenem Wasser verschiedenen Bestandteile der Salzmischung beziehen.

2. Verfahren nach Anspruch 1, wobei die Verbindung A in Form von Natriumcarbonat wasserfrei, Natriumcarbonat-Monohydrat oder Natriumcarbonat-Decahydrat eingesetszt wird, wobei es sich insbesondere um Natriumcarbonat-wasserfrei handelt.

3. Verfahren nach Anspruch 1 oder 2, wobei die Salzmischung wenigstens eine Verbindung B enthält.

4. Verfahren nach Anspruch 3, wobei die Verbindung B ausgewählt ist unter Trinatriumphosphat, Trinatriumphosphat-Dodecahydrat, Trinatriumphosphat-Hexahydrat, Natriumpyrophoshat, Natriumpyrophosphat-Dodecahydrat, Natriumtripolyphosphat (STPP), Natriumhexametaphosphat (SHMP, n = 6), Natriumtetrametaphosphat (n = 4), Natriumtrimetaphosphat (n = 3), Natriumdihydrogenphosphat, Natriumdihydrogenphosphat-Monohydrat, Natriumdihydrogenphosphat-Dihydrat, Dinatriumhydrogenphosphat, Dinatriumhydrogenphosphat-Dihydrat, Dinatriumhydrogenphosphat-Heptahydrat und Dinatriumhydrogenphosphat-Dodecahydrat und deren Gemischen.

5. Verfahren nach Anspruch 4, wobei die Verbindung B ausgewählt ist unter Dinatriumhydrogenphosphat, Dinatriumhydrogenphosphat-Dihydrat, Dinatriumhydrogenphosphat-Heptahydrat und Dinatriumhydrogenphosphat-Dodecahydrat und deren Gemischen.

6. Verfahren nach Anspruch 3, wobei die Verbindung B ausgewählt ist unter Tetranatriumorthosilikat und Dinatriummetasilikat und deren Gemischen.

7. Verfahren nach einem der Ansprüche 3 bis 8, wobei die Salzmischung die Verbindung B in einer Gesamtmenge von 0,2 bis 0,7 Gew.-%, speziell 0,25 bis 0,5 Gew.-%, bezogen auf das Gesamtgewicht der von ungebundenem Wasser verschiedenen Bestandteile der Salzmischung, enthält.

8. Verfahren nach einem der Ansprüche 3 bis 7, wobei Gesamtmenge an Verbindung A und Verbindung B im Bereich von 0,1 bis 1,5 Gew.-%, insbesondere im Bereich von 0,3 bis 1,2 Gew.-% und speziell im Bereich von 0,4 bis 1,1 Gew.-% liegt, jeweils auf das Gesamtgewicht der von ungebundenem Wasser verschiedenen Bestandteile Salzmischung bezogen.

9. Verfahren nach einem der vorhergehenden Ansprüche, wobei man die Granulierung in Gegenwart von 0,1 bis 3,0 Gew.-% Wasser, bezogen auf das Gesamtgewicht der von ungebundenem Wasser verschiedenen Bestandteile Salzmischung, durchführt.

10. Verfahren nach einem der vorhergehenden Ansprüche, wobei wenigstens 80 Gew.-% der Partikel des Polyhalits in der Salzmischung eine Teilchengröße im Bereich von 0,01 bis 2 mm aufweisen.

11. Verfahren nach einem der vorhergehenden Ansprüche, wobei wenigstens 80 Gew.-% der Partikel des feinteiligen Kaliumchlorids in der Salzmischung eine Teilchengröße im Bereich von 0,01 bis 2 mm aufweisen.

12. Verfahren nach einem der vorhergehenden Ansprüche, wobei das Kaliumchlorid einen Gehalt an Kalium von wenigstens 50 Gew.-%, gerechnet als K₂O, aufweist.

13. Verfahren nach einem der vorhergehenden Ansprüche, wobei sich der Pressagglomeration eine Behandlung des frisch hergestellten Granulats mit Wasser anschließt.

14. Kalium, Magnesium und Sulfat enthaltendes Granulat, erhältlich durch ein Verfahren nach einem der vorhergehenden Patentansprüche.

15. Verwendung eines Kalium, Magnesium und Sulfat enthaltendes Granulats nach Anspruch 14 als Düngemittel oder zur Herstellung von Düngemittelzusammensetzungen.
